# EUROPEAN PATENT SPECIFICATION

(11) **EP 2 494 013 B1**
(45) Date of publication and mention of the grant of the patent: **18.09.2013**
(21) Application number: 10763273.9
(22) Date of filing: 29.09.2010
(51) Int. Cl.: C10M 133/12, C10M 169/04, C09K 15/18, C10N 40/25, C10N 30/12

(54) **LUBRICATION AND LUBRICATING OIL COMPOSITIONS**
SCHMIERMITTEL- UND SCHMIERÖLZUSAMMENSETZUNGEN
LUBRIFICATION ET COMPOSITIONS D'HUILES LUBRIFIANTES

(30) Priority: 29.10.2009 US 608412
(43) Date of publication of application: 05.09.2012
(73) Proprietor: Chemtura Corporation, Middlebury, CT 06749 (US); Infineum International Limited, Oxfordshire OX13 6BB (GB); Stieber, Joseph, Middlebury, CT 06749 (US)
(72) Inventor: STIEBER, Joseph, CT 06749 (US); HARTLEY, Joseph, P., Abingdon Oxfordshire OX13 6BB (GB); ROWLAND, Robert, G., Woodbridge CT 06525 (US); CHENG, Jie, Linden NJ 07036 (US); EMERT, Jacob, Linden NJ 07036 (US)
(74) Representative: Serravalle, Marco
(86) International application number: PCT/US2010/050618
(87) International publication number: WO 2011/059583

(56) References cited:
- EP-A1- 2 206 764
- EP-A2- 1 741 772
- WO-A1-81/02505
- GB-A- 1 296 592
- US-A- 5 232 614
- US-A1- 2009 156 441
- US-A1- 2009 156 449

## Description

### FIELD OF THE INVENTION

This invention relates to phenylenediamine compounds useful as ashless TBN (Total Base Number) boosters for lubricating oil compositions, and lubricating oil compositions, particularly crankcase lubricating oil compositions having reduced levels of sulfated ash (SASH), containing same.

### BACKGROUND OF THE INVENTION

Environmental concerns have led to continued efforts to reduce the CO, hydrocarbon and nitrogen oxide (NOₓ) emissions of compression ignited (diesel-fueled) and spark ignited (gasoline-fueled) light duty internal combustion engines. Further, there have been continued efforts to reduce the particulate emissions of compression ignited internal combustion engines. To meet the upcoming emission standards for heavy duty diesel vehicles, original equipment manufacturers (OEMs) may require additional exhaust gas after-treatment devices. Such exhaust gas after-treatment devices may include catalytic converters, which can contain one or more oxidation catalysts, NOₓ storage catalysts, and/or NH₃ reduction catalysts; and/or a particulate trap.

Oxidation catalysts can become poisoned and rendered less effective by exposure to certain elements/compounds present in engine exhaust gasses, particularly by exposure to phosphorus and phosphorus compounds introduced into the exhaust gas by the degradation of phosphorus-containing lubricating oil additives. Reduction catalysts are sensitive to sulfur and sulfur compounds in the engine exhaust gas introduced by the degradation of both the base oil used to blend the lubricant, and sulfur-containing lubricating oil additives. Particulate traps can become blocked by metallic ash, which is a product of degraded metal-containing lubricating oil additives.

To ensure a long service life, lubricating oil additives that exert a minimum negative impact on such after-treatment devices must be identified, and OEM specifications for "new service fill" and "first fill" heavy duty diesel (HDD) lubricants require maximum sulfur levels of 0.4 mass %; maximum phosphorus levels of 0.12 mass %, and sulfated ash contents below 1.1 mass %, which lubricants are referred to as "mid-SAPS" lubricants (where "SAPS" is an acronym for "Sulfated Ash, Phosphorus, Sulfur"). In the future, OEMs may further restrict these levels maximum levels to 0.08 mass % phosphorus, 0.2 mass % sulfur and 0.8 mass % sulfated ash, with such lubricants being referred to as "low-SAPS" lubricating oil compositions.

As the amounts of phosphorus, sulfur and ash-containing lubricant additives are being reduced to provide mid- and low-SAPS lubricants that are compatible with exhaust gas after-treatment devices, the lubricating oil composition must continue to provide the high levels of lubricant performance, including adequate detergency, dictated by the "new service", and "first fill" specifications of the OEM's, such as the ACEA E6 and MB p228.51 (European) and API CI-4+ and API CJ-4 (U.S.) specifications for heavy duty engine lubricants. Criteria for being classified as a lubricating oil composition meeting the above listed industry standards are known to those skilled in the art.

The ability of a lubricant to neutralized acidic byproducts of combustion, which increases in engines provided with exhaust gas recirculation (EGR) systems, particularly condensed EGR systems in which exhaust gasses are cooled prior to recirculation, can be improved, and the drain interval of the lubricant can be extended, by increasing the total base number (TBN) of the composition. Hitherto, TBN has been provided by overbased detergents that introduce sulfated ash into the composition. It would be advantageous to provide a lubricating oil composition with a high level of TBN using a TBN boosting component that does not contribute sulfated ash. As highly basic components are known to induce corrosion and, in some cases reduce the compatibility between lubricating oil compositions and the fluoroelastomeric seal materials used in engines, it would be preferable to provide such a component that does not induce corrosion and, preferably, does not adversely affect seals compatibility. Due to demands for improved fuel economy, less viscous lubricants, such as 0W and 5W 20 and 30 grade lubricants, have become more prevalent. To allow for easier formulation of such lubricants, the amount of polymer introduced by additives is preferably minimized. Therefore, it would be further preferable to provide a non-polymeric ashless TBN source.

US Patent Nos. 5,525,247; 5,672,570; and 6,569,818 are directed to "low ash" lubricating oil compositions in which sulfated ash content is reduced by replacing overbased detergents with neutral detergents. These patents describe such lubricants as providing sufficient detergency, but do not describe that they provide sufficient TBN for use, for example, in HDD engines. US Patent Application 2007/0203031 describes the use of a high TBN nitrogen-containing dispersants as ashless TBN sources.
US Patent No. 5,232,614 describes substituted para-phenylenediamines as effective anti-oxidants for lubricating oil compositions. GB-B-1 296592 describes N,N,N'-trialkyl-N'-aryl-p-phenylenediamines, but as antioxidants for peroxide-cross-linked polyethylene compositions. Two of the alkyl groups have from one to four carbon atoms.

### SUMMARY OF THE INVENTION

This invention meets the above-mentioned problems by providing aryl-trialiphatic hydrocarbyl phenylenediamines as ashless TBN boosters, measured according to ASTM D4739, in lubricating oil compositions, and which meet the requirements of seals compatibility and copper corrosion tests.

In accordance with a first aspect of the invention, there is provided a crankcase lubricating oil composition such as a heavy duty diesel lubricating oil comprising or made by admixing an oil of lubricating viscosity, in a major amount, and, one or more N-aryl-N,N', N'-aliphatic hydrocarbyl phenylenediamines, in minor amounts, wherein each aliphatic hydrocarbyl group, preferably alkyl group, is independently straight-chained and preferably has 1 to 12, preferably 5 to 12, carbon atoms.

In accordance with a second aspect of the present invention, there is provided a method of increasing the TBN of a lubricating oil composition without concurrently increasing the SASH content of the composition, which method comprises incorporating into the composition, in minor amounts, one or more phenylenediamines as defined in the first aspect of the invention.

In accordance with a third aspect of the invention, there is provided a method of lubricating surfaces of a compression-ignited internal combustion engine during its operation comprising:
(a) providing, in a minor amount, one or more phenylenediamines as defined in the first aspect of the invention in a major amount of an oil of lubricating viscosity to make a lubricating oil composition the TBN of which, as measured by ASTM D4739 is thereby enhanced without concurrently increasing the SASH and that has copper corrosion performance in the high-temperature bench corrosion test (ASTM D6594) that falls within the limits of the API CJ-4 and ACEA E6 specification, and has fluoroelastomeric engine seal materials compatibility performance in the MB-AK6 test that falls within the limits of the MB p228.51 specification;
(b) providing the lubricating oil composition to the engine crankcase; and
(c) operating the engine.

In accordance with a fourth aspect of the invention, there are provided lubricating oil compositions, as in the first aspect, meeting the performance criteria of one or more of the ACEA E6, MB p228.51, API CI-4+ and API CJ-4 specifications for heavy duty engine lubricants.

In accordance with a fifth aspect of the invention, there is provided a heavy duty diesel engine equipped with an exhaust gas recirculation (EGR) system, preferably a condensed EGR system and a particulate trap, the crankcase of which engine is lubricated with a lubricating oil composition of the first aspect.

In accordance with a sixth aspect of the invention, there is provided a method for forming a high TBN lubricant having a reduced SASH content comprising incorporating into said lubricating oil composition one or more of the phenylenediamine compounds of the first aspect of the invention.

In accordance with a seventh aspect of the invention, there is provided an N-aryl-N, N',N'-aliphatic hydrocarbyl phenylenediamine wherein each aliphatic hydrocarbyl, preferably alkyl group, is independently straight chained and preferably has from 5 to 12, more preferably 5 to 8, carbon atoms.

In this specification, the following words and expressions, if and when used, have the meanings ascribed below:
"active ingredient" or "(a.i.)" refers to additive material that is not diluent or solvent;
"comprising" or any cognate word specifies the presence of stated features, steps, or integers or components, but does not preclude the presence or addition of one or more other features, steps, integers, components or groups thereof; the expressions "consists of" or "consists essentially of" or cognates may be embraced within "comprises" or cognates, wherein "consists essentially of" permits inclusion of substances not materially affecting the characteristics of the composition to which it applies;
"major amount" means in excess of 50 mass % of a composition;
"minor amount" means less than 50 mass % of a composition;
"TBN" means total base number as measured by ASTM D2896 or ASTM D4739, as indicated.
Furthermore in this specification:
"phosphorus content" is as measured by ASTM D5185;
"sulphated ash content" is as measured by ASTM D874;
"sulphur content" is as measured by ASTM D2622;
"KV100" means kinematic viscosity at 100°C as measured by ASTM D445; and
"hydrocarbyl", and cognate words, refer to groups that contain carbon and hydrogen atoms and that are bonded to the remainder of the molecule directly via a carbon atom.
They may contain hetero atoms provided such hetero atoms do not affect the essentially hydrocarbon nature of the hydrocarbyl groups.

Also, it will be understood that various components used, essential as well as optimal and customary, may react under conditions of formulation, storage or use and that the invention also provides the product obtainable or obtained as a result of any such reaction.

Further, it is understood that any upper and lower quality, range and ratio limits set forth herein may be independently combined.

### DETAILED DESCRIPTION OF THE INVENTION

Phenylenediamines of the invention are found to contribute to the TBN of a lubricant as measured in ASTM D2896 and also as measured in ASTM D4739. Further, as demonstrated in the examples of this specification, the phenylenediamines do not cause lubricants to fail any of the seals compatibility tests such in the MBSEAL-2/AK6 test and do not cause lubricants to fail any of the HTCBT tests as described in ASTM D6594, in particular the copper corrosion test thereof.

Phenylenediamines useful in this invention may be depicted by the formula below: 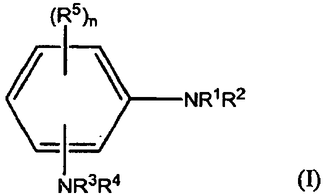 where R¹ is aryl, each of R², R³ and R⁴ is independently straight-chain C₁ to C₁₂ aliphatic hydrocarbyl, preferably alkyl, most preferably C₅ to C₈, alkyl;
R⁵, or each R⁵, is independently hydrogen or hydrocarbyl, preferably alkyl, having 1 to 12 carbon atoms; and
n is 0 - 4.

Preferably, the phenylenediamine compounds useful in this invention have a TBN (measured as in ASTM D-2896 and/or ASTM D4739, preferably measured as in ASTM D4739) of at least 50, such as at least 100, preferably at least 120 mg KOH/g.

Phenylenediamines of the present invention may be in the form of a single compound, or may be a mixture of compounds of the above formula.

Preferably, the phenylenediamine of the present invention has, or have on average, a molecular weight of from 450 to 700, such as from 450 to 650, preferably from 500 to 600.

Preferably, the nitrogen atoms are arranged para to one another.

The phenylenediamine compounds useful in the invention may be made by methods such as those known in the art.

Lubricating oil compositions of the present invention comprise a major amount of an oil of lubricating viscosity and a minor amount of the phenylenediamine.

Oils of lubricating viscosity useful in the context of the present invention may be selected from natural lubricating oils, synthetic lubricating oils and mixtures thereof. The lubricating oil may range in viscosity from light distillate mineral oils to heavy lubricating oils such as gasoline engine oils, mineral lubricating oils and heavy duty diesel oils. Generally, the viscosity of the oil ranges from 2 to 40, especially from 4 to 20, mm²s⁻¹ as measured at 100°C.

Natural oils include animal oils and vegetable oils (e.g., castor oil, lard oil); liquid petroleum oils and hydrorefined, solvent-treated or acid-treated mineral oils of the paraffinic, naphthenic and mixed paraffinic-naphthenic types. Oils of lubricating viscosity derived from coal or shale also serve as useful base oils.

Synthetic lubricating oils include hydrocarbon oils and halo-substituted hydrocarbon oils such as polymerized and interpolymerized olefins (e.g., polybutylenes, polypropylenes, propylene-isobutylene copolymers, chlorinated polybutylenes, poly(1-hexenes), poly(1-octenes), poly(1-decenes)); alkylbenzenes (e.g., dodecylbenzenes, tetradecylbenzenes, dinonylbenzenes, di(2-ethylhexyl)benzenes); polyphenyls (e.g., biphenyls, terphenyls, alkylated polyphenols); and alkylated diphenyl ethers and alkylated diphenyl sulfides and derivative, analogs and homologs thereof. Also useful are synthetic oils derived from a gas to liquid process from Fischer-Tropsch synthesized hydrocarbons, which are commonly referred to as gas to liquid, or "GTL" base oils.

Alkylene oxide polymers and interpolymers and derivatives thereof where the terminal hydroxyl groups have been modified by esterification, etherification, etc., constitute another class of known synthetic lubricating oils. These are exemplified by polyoxyalkylene polymers prepared by polymerization of ethylene oxide or propylene oxide, and the alkyl and aryl ethers of polyoxyalkylene polymers (e.g., methyl-polyiso-propylene glycol ether having a molecular weight of 1000 or diphenyl ether of poly-ethylene glycol having a molecular weight of 1000 to 1500); and mono- and polycarboxylic esters thereof, for example, the acetic acid esters, mixed C₃-C₈ fatty acid esters and C₁₃ oxo acid diester of tetraethylene glycol.

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkylmalonic acids, alkenyl malonic acids) with a variety of alcohols (e.g., butyl alcohol, hexyl alcohol, dodecyl alcohol, 2-ethylhexyl alcohol, ethylene glycol, diethylene glycol monoether, propylene glycol). Specific examples of such esters includes dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from C₅ to C₁₂ monocarboxylic acids and polyols and polyol esters such as neopentyl glycol, trimethylolpropane, pentaerythritol, dipentaerythritol and tripentaerythritol.

Silicon-based oils such as the polyalkyl-, polyaryl-, polyalkoxy- or polyaryloxysilicone oils and silicate oils comprise another useful class of synthetic lubricants; such oils include tetraethyl silicate, tetraisopropyl silicate, tetra-(2-ethylhexyl) silicate, tetra-(4-methyl-2-ethylhexyl)silicate, tetra-(p-tert-butyl-phenyl) silicate, hexa-(4-methyl-2-ethylhexyl)disiloxane, poly(methyl)siloxanes and poly(methylphenyl)siloxanes. Other synthetic lubricating oils include liquid esters of phosphorous-containing acids (e.g., tricresyl phosphate, trioctyl phosphate, diethyl ester of decylphosphonic acid) and polymeric tetrahydrofurans.

The oil of lubricating viscosity may comprise a Group I, Group II or Group III, base stock or base oil blends of the aforementioned base stocks. Preferably, the oil of lubricating viscosity is a Group II or Group III base stock, or a mixture thereof, or a mixture of a Group I base stock and one or more a Group II and Group III. Preferably, a major amount of the oil of lubricating viscosity is a Group II, Group III, Group IV or Group V base stock, or a mixture thereof. The base stock, or base stock blend preferably has a saturate content of at least 65, more preferably at least 75, such as at least 85, %. Most preferably, the base stock, or base stock blend, has a saturate content of greater than 90%. Preferably, the oil or oil blend has a sulfur content of less than 1, preferably less than 0.6, most preferably less than 0.4, % by weight.

Preferably the volatility of the oil or oil blend, as measured by the Noack volatility test (ASTM D5880), is less than or equal to 30, preferably less than or equal to 25, more preferably less than or equal to 20, most preferably less than or equal to 16, %. Preferably, the viscosity index (VI) of the oil or oil blend is at least 85, preferably at least 100, most preferably from about 105 to 140.

Definitions for the base stocks and base oils in this invention are the same as those found in the American Petroleum Institute (API) publication "Engine Oil Licensing and Certification System", Industry Services Department, Fourteenth Edition, December 1996, Addendum 1, December 1998. Said publication categorizes base stocks as follows:
a) Group I base stocks contain less than 90 percent saturates and/or greater than 0.03 percent sulfur and have a viscosity index greater than or equal to 80 and less than 120 using the test methods specified in Table 1.
b) Group II base stocks contain greater than or equal to 90 percent saturates and less than or equal to 0.03 percent sulfur and have a viscosity index greater than or equal to 80 and less than 120 using the test methods specified in Table 1.
c) Group III base stocks contain greater than or equal to 90 percent saturates and less than or equal to 0.03 percent sulfur and have a viscosity index greater than or equal to 120 using the test methods specified in Table 1.
d) Group IV base stocks are polyalphaolefins (PAO).
e) Group V base stocks include all other base stocks not included in Group I, II, III, or IV.

**Table I - Analytical Methods for Base Stock**

| Property | Test Method |
|---|---|
| Saturates | ASTM D 2007 |
| Viscosity Index | ASTM D 2270 |
| Sulfur | ASTM D 2622 |
| | ASTM D 4294 |
| | ASTM D 4927 |
| | ASTM D 3120 |

Metal-containing or ash-forming detergents function both as detergents to reduce or remove deposits and as acid neutralizers or rust inhibitors, thereby reducing wear and corrosion and extending engine life. Detergents generally comprise a polar head with a long hydrophobic tail, with the polar head comprising a metal salt of an acidic organic compound. The salts may contain a substantially stoichiometric amount of the metal in which case they are usually described as normal or neutral salts, and would typically have a total base number or TBN (as can be measured by ASTM D2896) of from 0 to 80. A large amount of a metal base may be incorporated by reacting excess metal compound (e.g., an oxide or hydroxide) with an acidic gas (e.g., carbon dioxide). The resulting overbased detergent comprises neutralized detergent as the outer layer of a metal base (e.g. carbonate) micelle. Such overbased detergents may have a TBN of 150 or greater, and typically will have a TBN of from 250 to 450 or more. In the presence of the hydrocarbylated phenylenediamines, the amount of overbased detergent can be reduced, or detergents having reduced levels of overbasing (e.g., detergents having a TBN of 100 to 200), or neutral detergents can be employed, resulting in a corresponding reduction in the SASH content of the lubricating oil composition without a reduction in the performance thereof.

Detergents that may be used include oil-soluble neutral and overbased sulfonates, phenates, sulfurized phenates, thiophosphonates, salicylates, and naphthenates and other oil-soluble carboxylates of a metal, particularly the alkali or alkaline earth metals, e.g., sodium, potassium, lithium, calcium, and magnesium. The most commonly used metals are calcium and magnesium, which may both be present in detergents used in a lubricant, and mixtures of calcium and/or magnesium with sodium. Particularly convenient metal detergents are neutral and overbased calcium sulfonates having TBN of from 20 to 450 TBN, and neutral and overbased calcium phenates and sulfurized phenates having TBN of from 50 to 450. Combinations of detergents, whether overbased or neutral or both, may be used.

Sulfonates may be prepared from sulfonic acids which are typically obtained by the sulfonation of alkyl substituted aromatic hydrocarbons such as those obtained from the fractionation of petroleum or by the alkylation of aromatic hydrocarbons. Examples included those obtained by alkylating benzene, toluene, xylene, naphthalene, diphenyl or their halogen derivatives such as chlorobenzene, chlorotoluene and chloronaphthalene. The alkylation may be carried out in the presence of a catalyst with alkylating agents having from about 3 to more than 70 carbon atoms. The alkaryl sulfonates usually contain from about 9 to about 80 or more carbon atoms, preferably from about 16 to about 60 carbon atoms per alkyl substituted aromatic moiety.

The oil-soluble sulfonates or alkaryl sulfonic acids may be neutralized with oxides, hydroxides, alkoxides, carbonates, carboxylate, sulfides, hydrosulfides, nitrates, borates and ethers of the metal. The amount of metal compound is chosen having regard to the desired TBN of the final product but typically ranges from about 100 to 220 mass % (preferably at least 125 mass %) of that stoichiometrically required.

Metal salts of phenols and sulfurized phenols are prepared by reaction with an appropriate metal compound such as an oxide or hydroxide and neutral or overbased products may be obtained by methods well known in the art. Sulfurized phenols may be prepared by reacting a phenol with sulfur or a sulfur containing compound such as hydrogen sulfide, sulfur monohalide or sulfur dihalide, to form products which are generally mixtures of compounds in which two or more phenols are bridged by sulfur-containing bridges.

Lubricating oil compositions of the present invention may further contain one or more ashless dispersants, which effectively reduce formation of deposits upon use in gasoline and diesel engines, when added to lubricating oils. Ashless dispersants useful in the compositions of the present invention comprises an oil soluble polymeric long chain backbone having functional groups capable of associating with particles to be dispersed. Typically, such dispersants comprise amine, alcohol, amide or ester polar moieties attached to the polymer backbone, often via a bridging group. The ashless dispersant may be, for example, selected from oil-soluble salts, esters, amino-esters, amides, imides and oxazolines of long chain hydrocarbon-substituted mono- and polycarboxylic acids or anhydrides thereof; thiocarboxylate derivatives of long chain hydrocarbons; long chain aliphatic hydrocarbons having polyamine moieties attached directly thereto; and Mannich condensation products formed by condensing a long chain substituted phenol with formaldehyde and polyalkylene polyamine. The most common dispersant in use is the well-known succinimide dispersant, which is a condensation product of a hydrocarbyl-substituted succinic anhydride and a poly(alkyleneamine). Both mono-succinimide and bis-succinimide dispersants (and mixtures thereof) are well known.

Preferably, the ashless dispersant is a "high molecular weight" dispersant having a number average molecular weight (M̅ₙ) greater than or equal to 4,000, such as between 4,000 and 20,000. The precise molecular weight ranges will depend on the type of polymer used to form the dispersant, the number of functional groups present, and the type of polar functional group employed. For example, for a polyisobutylene derivatized dispersant, a high molecular weight dispersant is one formed with a polymer backbone having a number average molecular weight of from 1680 to 5600. Typical commercially available polyisobutylene-based dispersants contain polyisobutylene polymers having a number average molecular weight ranging from about 900 to 2300, functionalized by maleic anhydride (MW = 98), and derivatized with polyamines having a molecular weight of from 100 to 350. Polymers of lower molecular weight may also be used to form high molecular weight dispersants by incorporating multiple polymer chains into the dispersant, which can be accomplished using methods that are know in the art.

Preferred groups of dispersant include polyamine-derivatized poly α-olefin, dispersants, particularly ethylene/butene alpha-olefin and polyisobutylene-based dispersants. Particularly preferred are ashless dispersants derived from polyisobutylene substituted with succinic anhydride groups and reacted with polyethylene amines, e.g., polyethylene diamine, tetraethylene pentamine; or a polyoxyalkylene polyamine, e.g., polyoxypropylene diamine, trimethylolaminomethane; a hydroxy compound, e.g., pentaerythritol; and combinations thereof. One particularly preferred dispersant combination is a combination of (A) polyisobutylene substituted with succinic anhydride groups and reacted with (B) a hydroxy compound, e.g., pentaerythritol; (C) a polyoxyalkylene polyamine, e.g., polyoxypropylene diamine, or (D) a polyalkylene diamine, e.g., polyethylene diamine and tetraethylene pentamine using about 0.3 to about 2 moles of (B), (C) and/or (D) per mole of (A). Another preferred dispersant combination comprises a combination of (A) polyisobutenyl succinic anhydride with (B) a polyalkylene polyamine, e.g., tetraethylene pentamine, and (C) a polyhydric alcohol or polyhydroxy-substituted aliphatic primary amine, e.g., pentaerythritol or trismethylolaminomethane, as described in U.S. Patent No. 3,632,511.

Another class of ashless dispersants comprises Mannich base condensation products. Generally, these products are prepared by condensing about mole of an alkyl-substituted mono- or polyhydroxy benzene with 1 to 2.5 moles of carbonyl compound(s) (e.g., formaldehyde and paraformaldehyde) and 0.5 to 2 moles of polyalkylene polyamine, as disclosed, for example, in U.S. Patent No. 3,442,808. Such Mannich base condensation products may include a polymer product of a metallocene catalyzed polymerization as a substituent on the benzene group, or may be reacted with a compound containing such a polymer substituted on a succinic anhydride in a manner similar to that described in U.S. Patent No. 3,442,808. Examples of functionalized and/or derivatized olefin polymers synthesized using metallocene catalyst systems are described in the publications identified *supra.*

The dispersant can be further post treated by a variety of conventional post treatments such as boration, as generally taught in U.S. Patent Nos. 3,087,936 and 3,254,025. Boration of the dispersant is readily accomplished by treating an acyl nitrogen-containing dispersant with a boron compound such as boron oxide, boron halide boron acids, and esters of boron acids, in an amount sufficient to provide from 0.1 to 20 atomic proportions of boron for each mole of acylated nitrogen composition. Useful dispersants contain from 0.05 to 2.0, e.g., from 0.05 to 0.7, mass % boron. The boron, which appears in the product as dehydrated boric acid polymers (primarily (HBO₂)₃), is believed to attach to the dispersant imides and diimides as amine salts, e.g., the metaborate salt of the diimide. Boration can be carried out by adding from 0.5 to 4, e.g., from 1 to 3, mass % (based on the mass of acyl nitrogen compound) of a boron compound, preferably boric acid, usually as a slurry, to the acyl nitrogen compound and heating with stirring at from 135 to 190, e.g., 140 to 170, °C, for from 1 to 5 hours, followed by nitrogen stripping. Alternatively, the boron treatment can be conducted by adding boric acid to a hot reaction mixture of the dicarboxylic acid material and amine, while removing water. Other post-reaction processes commonly known in the art can also be applied.

The dispersant may also be further post treated by reaction with a so-called "capping agent". Conventionally, nitrogen-containing dispersants have been "capped" to reduce the adverse effect such dispersants have on the fluoroelastomer engine seals. Numerous capping agents and methods are known. Of the known "capping agents", those that convert basic dispersant amino groups to non-basic moieties (e.g., amido or imido groups) are most suitable. The reaction of a nitrogen-containing dispersant and alkyl acetoacetate (e.g., ethyl acetoacetate (EAA)) is described, for example, in U.S. Patent Nos. 4,839,071; 4,839,072 and 4,579,675. The reaction of a nitrogen-containing dispersant and formic acid is described, for example, in U.S. Patent No. 3,185,704. The reaction product of a nitrogen-containing dispersant and other suitable capping agents are described in U.S. Patent Nos. 4,663,064 (glycolic acid); 4,612,132; 5,334,321; 5,356,552; 5,716,912; 5,849,676; 5,861,363 (alkyl and alkylene carbonates, e.g., ethylene carbonate); 5,328,622 (mono-epoxide); 5,026,495; 5,085,788; 5,259,906; 5,407,591 (poly (e.g., bis)-epoxides) and 4,686,054 (maleic anhydride or succinic anhydride). The foregoing list is not exhaustive and other methods of capping nitrogen-containing dispersants are known to those skilled in the art.

For adequate piston deposit control, a nitrogen-containing dispersant can be added in an amount providing the lubricating oil composition with from 0.03 to 0.15, preferably from 0.07 to 0.12, mass % of nitrogen.

Ashless dispersants are basic in nature and therefore have a TBN which, depending on the nature of the polar group and whether or not the dispersant is borated or treated with a capping agent, may be from 5 to 200 mg KOH/g. However, high levels of basic dispersant nitrogen are known to have a deleterious effect on the fluoroelastomeric materials conventionally used to form engine seals and, therefore, it is preferable to use the minimum amount of dispersant necessary to provide piston deposit control, and to use substantially no dispersant, or preferably no dispersant, having a TBN of greater than 5. Preferably, the amount of dispersant employed will contribute no more than 4, preferably no more than 3 mg KOH/g of TBN to the lubricating oil composition. It is further preferable that dispersant provides no greater than 30, preferably no greater than 25% of the TBN of the lubricating oil composition.

Additional additives may be incorporated in the compositions of the invention to enable them to meet particular requirements. Examples of additives which may be included in the lubricating oil compositions are metal rust inhibitors, viscosity index improvers, corrosion inhibitors, oxidation inhibitors, friction modifiers, other dispersants, anti-foaming agents, antiwear agents and pour point depressants. Some are discussed in further detail below.

Dihydrocarbyl dithiophosphate metal salts are frequently used as antiwear and antioxidant agents. The metal may be an alkali or alkaline earth metal, or aluminum, lead, tin, molybdenum, manganese, nickel, copper or zinc, zinc being preferred. The zinc salts are most commonly used in lubricating oil in amounts of 0.1 to 10, preferably 0.2 to 2, wt. %, based upon the total weight of the lubricating oil composition. They may be prepared in accordance with known techniques by first forming a dihydrocarbyl dithiophosphoric acid (DDPA), usually by reaction of one or more alcohol or a phenol with P₂S₅ and then neutralizing the formed DDPA with a zinc compound. For example, a dithiophosphoric acid may be made by reacting mixtures of primary and secondary alcohols. Alternatively, multiple dithiophosphoric acids can be prepared where the hydrocarbyl groups on one are entirely secondary in character and the hydrocarbyl groups on the others are entirely primary in character. To make the zinc salt, any basic or neutral zinc compound could be used but the oxides, hydroxides and carbonates are most generally employed. Commercial additives frequently contain an excess of zinc due to the use of an excess of the basic zinc compound in the neutralization reaction.

The preferred zinc dihydrocarbyl dithiophosphates are oil-soluble salts of dihydrocarbyl dithiophosphoric acids and may be represented by the following formula: 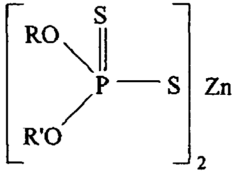 wherein R and R' may be the same or different hydrocarbyl radicals containing from 1 to 18, preferably 2 to 12, carbon atoms and including radicals such as alkyl, alkenyl, aryl, arylalkyl, alkaryl and cycloaliphatic radicals. Particularly preferred as R and R' groups are alkyl groups of 2 to 8 carbon atoms. Thus, the radicals may, for example, be ethyl, n-propyl, i-propyl, n-butyl, i-butyl, sec-butyl, amyl, n-hexyl, i-hexyl, n-octyl, decyl, dodecyl, octadecyl, 2-ethylhexyl, phenyl, butylphenyl, cyclohexyl, methylcyclopentyl, propenyl, butenyl. In order to obtain oil solubility, the total number of carbon atoms (i.e. R and R') in the dithiophosphoric acid will generally be about 5 or greater. The zinc dihydrocarbyl dithiophosphate can therefore comprise zinc dialkyl dithiophosphates. The present invention may be particularly useful when used with lubricant compositions containing phosphorus levels of from about 0.02 to about 0.12 mass %, such as from about 0.03 to about 0.10 mass %, or from about 0.05 to about 0.08 mass %, based on the total mass of the composition. In one preferred embodiment, lubricating oil compositions of the present invention contain zinc dialkyl dithiophosphate derived predominantly (e.g., over 50 mol. %, such as over 60 mol. %) from secondary alcohols.

Oxidation inhibitors or antioxidants reduce the tendency of mineral oils to deteriorate in service. Oxidative deterioration can be evidenced by sludge in the lubricant, varnish-like deposits on the metal surfaces, and by viscosity growth. Such oxidation inhibitors include hindered phenols, alkaline earth metal salts of alkylphenolthioesters having preferably C₅ to C₁₂ alkyl side chains, calcium nonylphenol sulfide, oil soluble phenates and sulfurized phenates, phosphosulfurized or sulfurized hydrocarbons, phosphorous esters, metal thiocarbamates, oil soluble copper compounds as described in U.S. Patent No. 4,867,890, and molybdenum-containing compounds.

Typical oil-soluble aromatic amines having at least two aromatic groups attached directly to one amine nitrogen contain from 6 to 16 carbon atoms. The amines may contain more than two aromatic groups. Compounds having a total of at least three aromatic groups in which two aromatic groups are linked by a covalent bond or by an atom or group (e.g., an oxygen or sulfur atom, or a -CO-, -SO₂- or alkylene group) and two are directly attached to one amine nitrogen also considered aromatic amines having at least two aromatic groups attached directly to the nitrogen. The aromatic rings are typically substituted by one or more substituents selected from alkyl, cycloalkyl, alkoxy, aryloxy, acyl, acylamino, hydroxy, and nitro groups.

Multiple antioxidants are commonly employed in combination. In one preferred embodiment, lubricating oil compositions of the present invention contain from 0.1 to 1.2 mass % of aminic antioxidant and from 0.1 to 3 mass % of phenolic antioxidant. In another preferred embodiment, lubricating oil compositions of the present invention contain from 0.1 to 1.2 mass % of aminic antioxidant, from 0.1 to 3 mass % of phenolic antioxidant and a molybdenum compound in an amount providing the lubricating oil composition from 10 to 1000 ppm of molybdenum.

Representative examples of suitable viscosity modifiers are polyisobutylene, copolymers of ethylene and propylene, polymethacrylates, methacrylate copolymers, copolymers of an unsaturated dicarboxylic acid and a vinyl compound, interpolymers of styrene and acrylic esters, and partially hydrogenated copolymers of styrene/ isoprene, styrene/butadiene, and isoprene/butadiene, as well as the partially hydrogenated homopolymers of butadiene and isoprene.

Friction modifiers and fuel economy agents that are compatible with the other ingredients of the final oil may also be included. Examples of such materials include glyceryl monoesters of higher fatty acids, for example, glyceryl mono-oleate; esters of long chain polycarboxylic acids with diols, for example, the butane diol ester of a dimerized unsaturated fatty acid; oxazoline compounds; and alkoxylated alkyl-substituted mono-amines, diamines and alkyl ether amines, for example, ethoxylated tallow amine and ethoxylated tallow ether amine.

Other known friction modifiers comprise oil-soluble organo-molybdenum compounds. Such organo-molybdenum friction modifiers also provide antioxidant and antiwear credits to a lubricating oil composition. Examples of such oil soluble organo-molybdenum compounds include dithiocarbamates, dithiophosphates, dithiophosphinates, xanthates, thioxanthates, sulfides, and the like, and mixtures thereof. Particularly preferred are molybdenum dithiocarbamates, dialkyldithiophosphates, alkyl xanthates and alkylthioxanthates.

Additionally, the molybdenum compound may be an acidic molybdenum compound. These compounds will react with a basic nitrogen compound as measured by ASTM test D-664 or D-2896 titration procedure and are typically hexavalent. Included are molybdic acid, ammonium molybdate, sodium molybdate, potassium molybdate, and other alkaline metal molybdates and other molybdenum salts, e.g., hydrogen sodium molybdate, MoOCl₄, MoO₂Br₂, Mo₂O₃Cl₆, molybdenum trioxide or similar acidic molybdenum compounds.

Among the molybdenum compounds useful in the compositions of this invention are organo-molybdenum compounds of the formulae:

Mo(ROCS₂)₄ and Mo(RSCS₂)₄

wherein R is an organo group selected from the group consisting of alkyl, aryl, aralkyl and alkoxyalkyl, generally of from 1 to 30 carbon atoms, and preferably 2 to 12 carbon atoms and most preferably alkyl of 2 to 12 carbon atoms. Especially preferred are the dialkyldithiocarbamates of molybdenum.

Another group of organo-molybdenum compounds useful in the lubricating compositions of this invention are trinuclear molybdenum compounds, especially those of the formula Mo₃SₖLₙQ_{z} and mixtures thereof wherein the L are independently selected ligands having organo groups with a sufficient number of carbon atoms to render the compound soluble or dispersible in the oil, n is from 1 to 4, k varies from 4 through 7, Q is selected from the group of neutral electron donating compounds such as water, amines, alcohols, phosphines, and ethers, and z ranges from 0 to 5 and includes non-stoichiometric values. At least 21 total carbon atoms should be present among all the ligand organo groups, such as at least 25, at least 30, or at least 35 carbon atoms.

A dispersant - viscosity index improver functions as both a viscosity index improver and as a dispersant. Examples of dispersant - viscosity index improvers include reaction products of amines, for example polyamines, with a hydrocarbyl-substituted mono-or dicarboxylic acid in which the hydrocarbyl substituent comprises a chain of sufficient length to impart viscosity index improving properties to the compounds. In general, the viscosity index improver dispersant may be, for example, a polymer of a C₄ to C₂₄ unsaturated ester of vinyl alcohol or a C₃ to C₁₀ unsaturated mono-carboxylic acid or a C₄ to C₁₀ di-carboxylic acid with an unsaturated nitrogen-containing monomer having 4 to 20 carbon atoms; a polymer of a C₂ to C₂₀ olefin with an unsaturated C₃ to C₁₀ mono- or di-carboxylic acid neutralized with an amine, hydroxyl amine or an alcohol; or a polymer of ethylene with a C₃ to C₂₀ olefin further reacted either by grafting a C₄ to C₂₀ unsaturated nitrogen-containing monomer thereon or by grafting an unsaturated acid onto the polymer backbone and then reacting carboxylic acid groups of the grafted acid with an amine, hydroxy amine or alcohol.

Pour point depressants, otherwise known as lube oil flow improvers (LOFI), lower the minimum temperature at which the fluid will flow or can be poured. Such additives are well known. Typical of those additives that improve the low temperature fluidity of the fluid are C₈ to C₁₈ dialkyl fumarate/vinyl acetate copolymers, and polymethacrylates. Foam control can be provided by an antifoamant of the polysiloxane type, for example, silicone oil or polydimethyl siloxane.

Some of the above-mentioned additives can provide a multiplicity of effects; thus for example, a single additive may act as a dispersant-oxidation inhibitor. This approach is well known and need not be further elaborated herein.

In the present invention it may also be preferable to include an additive which maintains the stability of the viscosity of the blend. Thus, although polar group-containing additives achieve a suitably low viscosity in the pre-blending stage it has been observed that some compositions increase in viscosity when stored for prolonged periods. Additives which are effective in controlling this viscosity increase include the long chain hydrocarbons functionalized by reaction with mono- or dicarboxylic acids or anhydrides which are used in the preparation of the ashless dispersants as hereinbefore disclosed.

When lubricating compositions contain one or more of the above-mentioned additives, each additive is typically blended into the base oil in an amount that enables the additive to provide its desired function.

When lubricating compositions contain one or more of the above-mentioned additives, each additive is typically blended into the base oil in an amount that enables the additive to provide its desired function. Representative effect amounts of such additives, when used in crankcase lubricants, are listed below. All the values listed are stated as mass percent active ingredient.

**Table II**

| ADDITIVE | MASS % (Broad) | MASS % (Preferred) |
|---|---|---|
| Metal Detergents | 0.1 - 15 | 0.2 - 9 |
| Corrosion Inhibitor | 0 - 5 | 0 - 1.5 |
| Metal Dihydrocarbyl Dithiophosphate | 0.1 - 6 | 0.1 - 4 |
| Antioxidant | 0 - 5 | 0.01 - 3 |
| Pour Point Depressant | 0.01 - 5 | 0.01 - 1.5 |
| Antifoaming Agent | 0 - 5 | 0.001 - 0.15 |
| Supplemental Antiwear Agents | 0 - 1.0 | 0 - 0.5 |
| Friction Modifier | 0 - 5 | 0 - 1.5 |
| Viscosity Modifier | 0.01 - 10 | 0.25 - 3 |
| Basestock | Balance | Balance |

Fully-formulated lubricating oil compositions of the present invention preferably have a TBN of at least 8.5, preferably at least 9, such as from 8.5 to 13, preferably from 9 to 13, and more preferably from 9 to 11 mg, KOH/g (ASTM D2896).

Fully-formulated lubricating oil compositions of the present invention preferably have a sulfated ash (SASH) content (ASTM D-874) of 1.1 or less, preferably 1.0 or less, more preferably 0.8 or less, mass %.

Preferably, fully-formulated lubricating oil compositions of the present invention derive at least 5, such as at least 10, such as at least 15, preferably at least 20, such as at least 25 % of the compositional TBN from ashless TBN sources including at least one of the phenylenediamine compounds. More preferably, fully-formulated lubricating oil compositions of the present invention derive at least 5, preferably at least 10, such as at least 15, more preferably at least 20, % of the compositional TBN from at least one of the phenylenediamine compounds, and less than 25, preferably less than 20, more preferably less than 15, % of the compositional TBN from ashless TBN sources other than the phenylenediamine compounds, including basic dispersants.

Fully-formulated lubricating oil compositions of the present invention further preferably have a sulfur content of less than 0.4, more preferably less than 0.35 more preferably less than about 0.03, such as less than 0.15, mass %. Preferably, the Noack volatility (ASTM D5880) of the fully-formulated lubricating oil composition (oil of lubricating viscosity plus all additives and additive diluent) is no greater than 13, such as no greater than 12, preferably no greater than 10. Fully-formulated lubricating oil compositions of the present invention preferably have no greater than 1200, such as no greater than 1000, or no greater than 800, ppm of phosphorus.

It may be desirable, although not essential to prepare one or more additive concentrates comprising additives (concentrates sometimes being referred to as additive packages) whereby several additives can be added simultaneously to the oil to form the lubricating oil composition. A concentrate for the preparation of a lubricating oil composition of the present invention may, for example, contain from 2.5, such as 5, to 30 mass % of one or more of the phenylenediamine compounds; 10 to 40 mass % of a nitrogen-containing dispersant; 2 to 20 mass % of an aminic antioxidant, a phenolic antioxidant, a molybdenum compound, or a mixture thereof; 5 to 40 mass % of a detergent; and from 2 to 20 mass % of a metal dihydrocarbyl dithiophosphate.

The final composition may employ from 5 to 25, preferably 5 to 18, typically 10 to 15, mass % of the concentrate, the remainder being oil of lubricating viscosity and viscosity modifier.

All weight (and mass) percents expressed herein (unless otherwise indicated) are based on active ingredient (A.I.) content of the additive, and/or additive-package, exclusive of any associated diluent. However, detergents are conventionally formed in diluent oil, which is not removed from the product, and the TBN of a detergent is conventionally provided for the active detergent in the associated diluent oil. Therefore, weight (and mass) percents, when referring to detergents are (unless otherwise indicated) total weight (or mass) percent of active ingredient and associated diluent oil.

This invention will be further understood by reference to the following examples, wherein all parts are parts by weight (or mass), unless otherwise noted.

### EXAMPLES

The present invention is illustrated by but in no way limited to the following examples.

### TBN PERFORMANCE

The basicity of a lubricating oil composition can be determined by acid titration. The resulting neutralization number is expressed as total base number, or TBN, and can be measured using various methods. Two methods conventionally selected to evaluate ashless base sources are ASTM D4739 (potentiometric hydrochloric acid titration) and ASTM D2896 (potentiometric perchloric acid titration). ASTM D2896 uses a stronger acid than ASTM D4739 and a more polar solvent system. The combination of the stronger acid and more polar solvent results in a more repeatable method that measures the presence of both strong and weak bases. The TBN value as determined by ASTM D2896 is often used in fresh oil specifications. The ASTM D4739 method is favored in engine tests and with used oils to measure TBN depletion/retention. In general, the ASTM D4739 method results in a lower measured TBN value because only stronger basic species are titrated.

### COMPONENTS

The following phenylenediamines ("PDA's") were used.
PDA1: N, N, N¹-tri-n-pentyl-N¹-phenyl-p-phenylenediamine
PDA2: N, N, N¹-tri-iso-butyl-N¹-phenyl-p-phenylenediamine (comparison)
PDA3: N, N, N¹-tri-(2-ethylhexyl)-N¹-phenyl-p-phenylenediamine (comparison)
PDA4: N, N¹-di-iso-butyl-N-(1-methyldecyl)-N¹-phenyl-p-phenylenediamine (comparison)

PDA1 is of the invention; PDA2-4 are for comparison. Each PDA was made by using reductive alkylation of the phenylenediamine with an aldehyde or ketone and sodium triacetoxyborohydride in a modification of the method of Abdel-Majid, A. F. et al., 61 J. ORG. CHEM. 3849-62 (1996). Those skilled in the art will recognize that adjustments in stoichiometry, reaction time, and reaction temperature may be required to achieve the desired reaction with varying starting materials. The following examples are illustrative of this method.

### Synthesis Examples

### PDA1: N-Phenyl-N,N',N'-tri-n-pentyl-p-phenylenediamine

A suspension of N-phenyl-p-phenylenediamine (22.4g, 122mmol) and sodium triacetoxyborohydride (100g, 472mmol) in dichloromethane (500mL) was stirred at room temperature in a 1 litre flask equipped with reflux condenser. Valeraldehyde (40.7g, 472mmol) was added portionwise (5mL every 20 minutes). The reaction was left at room temperature overnight. TLC showed the reaction had gone to completion and was quenched with saturated aqueous NaHCO₃. The mixture was partitioned and the organic phase washed with saturated aqueous NaHCO₃, water and brine. The organic phase was dried over MgSO₄, filtered and concentrated to afford a dark oil that was purified by column chromatography.

PDA's 2-4 were made by analogous methods.

### LUBRICANTS

The amount of basic constituents that are present in the oil can be determined by acid titration. The resulting neutralization number is expressed as the total base number, or TBN. The samples were tested at 1% and 2% treat rates in a reference oil in both ASTM methods D2896 and D4739 in order to measure the additional TBN brought by the added PDA. Method D4739 uses a less polar solvent and a weaker acid than D2896 and therefore only the stronger bases are titrated. D4739 is often used as a more accurate measure of an oil's ability to neutralise acids and the better performance associated with this attribute.

The alkylated N-aryl phenylenediamine compounds used were the four listed above.

### Example 1

A fully-formulated lubricating oil composition containing dispersant, a detergent mixture, antioxidant, ZDDP antiwear agent, pour point depressant and viscosity modifier, in base oil was prepared. The lubricating oil composition, which was representative of a commercial crankcase lubricant, was used as a reference lubricant.

To investigate the performance of the above N-aryl phenylenediamine compounds, 1.00 mass % and 2.00 mass % of PDA1 and 1.00 mass % and 2.00 mass % of PDA2 were respectively added to separate lubricant samples. An additional amount of base oil was added to each of the samples to provide comparable total mass. The TBN of the resulting samples was determined in accordance with each of ASTM D4739 and ASTM D2896 (in units of mg KOH/g). The results are shown in Table III:

**Table III**

| | Reference | Sample 1 | Sample 2 | Comparative Sample 1 | Comparative Sample 2 |
|---|---|---|---|---|---|
| Reference (g) | 47.5 | 47.5 | 47.5 | 47.5 | 47.5 |
| Added Base Oil (g) | 2.5 | 2 | 1.5 | 2 | 1.5 |
| PDA1 | | 0.5 | 1.0 | | |
| PDA2 | | | | 0.5 | 1.0 |
| Total Weight (g) | 50 | 50 | 50 | 50 | 50 |
| TBN by D4739 | 8.67 | 9.39 | 10.71 | 8.13 | 8.36 |
| TBN by D2896 | 9.51 | 10.63 | 11.64 | 11.36 | 12.64 |
| ΔTBN value against reference by D4739 | - | 0.72 | 2.04 | -0.54 | -0.31 |
| ΔTBN value against reference by D2896 | - | 1.12 | 2.13 | 1.85 | 3.13 |

The data of Table III show that both compounds (PDA1 and PDA2) effectively increased the TBN of the lubricating oil composition as measured by ASTM D2896, but that only PDA1 (of the invention) effectively increased the TBN of the lubricating oil composition as measured by ASTM D4739.

### Example 2

The procedure of Example 1 was repeated using PDA3. The results are shown in Table IV:

**Table IV**

| | Reference | Comparative Sample 3 | Comparative Sample 4 |
|---|---|---|---|
| Reference (g) | 47.50 | 47.50 | 47.50 |
| Added Base Oil (g) | 2.50 | 2.00 | 1.50 |
| PDA3 | | 0.50 | 1.00 |
| Total Weight (g) | 50 | 50 | 50 |
| TBN by D4739 | 8.33 | 7.83 | 8.16 |
| TBN by D2896 | 9.07 | 10.19 | 11.52 |
| ΔTBN value against reference by D4739 | - | -0.5 | -0.17 |
| ΔTBN value against reference by D2896 | - | 1.12 | 2.45 |

The data of Table IV show that PDA3 effectively increased the TBN of the lubricating oil composition as measured by ASTM D2896 without contributing to the SASH content, but did not effectively increase the TBN of the lubricating oil as measured by ASTM D4739.

### Example 3

The procedure of Example 1 was repeated using PDA4. The results are shown in Table III:

**Table V**

| | Reference | Comparative Sample 5 | Comparative Sample 6 |
|---|---|---|---|
| Reference (g) | 47.50 | 47.50 | 47.50 |
| Added Base Oil (g) | 2.50 | 2.00 | 2.50 |
| PDA4 | | 0.50 | 1.00 |
| Total Weight (g) | 50 | 50 | 50 |
| TBN by D4739 | 8.65 | 8.65 | 8.43 |
| TBN by D2896 | 9.32 | 10.59 | 11.7 |
| ΔTBN value against reference by D473 9 | - | 0 | -0.22 |
| ΔTBN value against reference by D2896 | - | 1.27 | 2.38 |

The data of Table V show that PDA4 effectively increased the TBN of the lubricating oil composition as measured by ASTM D2896 without contributing to the SASH content but did not effectively increase the TBN of the lubricating oil as measured by ASTM D4739.

### Example 4

A fully-formulated lubricant as in Example 1 was further tested to determine the effect of PDA1 on corrosion and seal compatibility. Corrosion was tested using the high temperature corrosion bench test (HTCBT) (ASTM D6595), which a formulated oil must pass before receiving API CJ-4 and ACEA E6 certification. Seal compatibility was evaluated using an industry-standard MB-AK6 test, which must be passed to qualify as a MB p228.51 lubricant. Both seal compatibility and corrosion were tested in the presence of an amount of PDA1 providing a TBN boost of two (as measured in D4739) over the TBN of the reference oil. The results are shown in Table IV:

**TableIV**

| Example | Compound | Calculated TBN Value (mg KOH/g) | ΔTBN by D4739 | ΔTBN by D2896 | HTCBT @ 2TBN by D4739 | MB-AK6 Seals Test @ 2TBN D4739 |
|---|---|---|---|---|---|---|
| Reference | ----- | ----- | ----- | ----- | Pass | Pass |
| Test | PDA1 | 284.3 | 2.0 | 2.0 | Pass | Pass |

As shown, PDA1 had no adverse effect on corrosion or seal compatibility when added to the reference oil in an amount providing a TBN boost of 2 mg KOH/g (by D4739).

A description of a composition comprising, consisting of, or consisting essentially of multiple specified components, as presented herein and in the appended claims, should be construed to also encompass compositions made by admixing said multiple specified components. The principles, preferred embodiments and modes of operation of the present invention have been described in the foregoing specification. What applicants submit is their invention, however, is not to be construed as limited to the particular embodiments disclosed, since the disclosed embodiments are regarded as illustrative rather than limiting.

## Claims

1. A crankcase lubricating oil composition such as a heavy duty diesel lubricating oil comprising or made by admixing an oil of lubricating viscosity, in a major amount, and, one or more N-aryl-N ,N',N'-trialiphatic hydrocarbyl phenylenediamine compounds, in a minor amount, each aliphatic hydrocarbyl group, preferably alkyl, being straight-chained and having 1 to 12, preferably 5 to 12, more preferably 5 to 8 carbon atoms.

2. A composition as claimed in claim 1 having a TBN measured according to ASTM D4739 of at least 6, such as 6 to 20.

3. A composition as claimed in claim 1 having a SASH content of no greater than 0.8, mass %.

4. A composition as claimed in claim 1 wherein at least 10, such as at least 15, or at least 20, such as at least 25 % of the compositional TBN as measured by ASTM D4739 is derived from said phenylenediamine compounds, and less than 25, preferably less than 20, % of the compositional TBN is derived from ashless TBN sources other than said phenylenediamine compounds, including basic dispersants.

5. A composition as claimed in claim 1 which has copper corrosion performance in the high-temperature bench corrosion test (ASTM D6594) that falls within the limits of the API CJ-4 and ACEA E6 specification, and has fluoroelastomeric engine seal materials compatibility performance in the MB-AK6 test that falls within the limits of the MB p228.51 specification.

6. A concentrate for the preparation of a lubricating oil composition as claimed in claim 1 comprising from 2.5 to 30 mass % of one or more of said phenylenediamine compounds; 10 to 40 mass % of a nitrogen-containing dispersant; 2 to 20 mass % of an aminic antioxidant, a phenolic antioxidant, a molybdenum compound, or a mixture thereof; 5 to 40 mass % of a detergent; and 2 to 20 mass % of a metal dihydrocarbyl dithiophosphate.

7. A method of lubricating surfaces of a compression-ignited internal combustion engine during its operation comprising
(a) providing, in a minor amount, one or more N-aryl-N,N',N'-trialiphatic hydrocarbyl phenylenediamine as defined in claim 1 in a major amount of an oil of lubricating viscosity to make a lubricating oil composition, the TBN of which, as measured by ASTM D4739 is thereby enhanced without concurrently increasing the SASH, and that has copper corrosion performance in the high-temperature bench corrosion test (ASTM D6594) that falls within the limits of the API CJ-4 and ACEA E6 specification, and has fluoroelastomeric engine seal materials compatibility performance in the MB-AK6 test that falls within the limits of the MB p228.51 specification;
(b) providing the lubricating oil composition to the engine crankcase; and
(c) operating said engine.

8. N-aryl-N,N',N'-aliphatic hydrocarbyl phenylenediamine of the formula 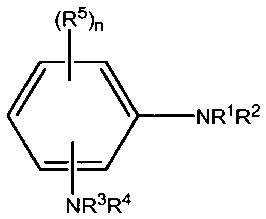 wherein R¹ is aryl;
each of R², R³ and R⁴ is independently straight chain C₅ to C₁₂ aliphatic hydrocarbyl, preferably alkyl, most preferably C₅ to C₈, alkyl;
R⁵, or each R⁵, is independently hydrogen or hydrocarbyl, preferably alkyl, having 1 to 12 carbon atoms; and
n is 0 - 4.

9. Phenylenediamine, as claimed in claim 8, having an average molecular weight of from 450 to 700, such as from 450 to 650, preferably from 500 to 600.

10. Phenylenediamine, as claimed in claim 8, wherein the nitrogen atoms are arranged para to one another.

11. A mixture of phenylenediamine compounds as claimed in any of claims 8 to 10.

12. N-Phenyl-N, N', N'-tri-n-pentyl-p-phenylenediamine.

13. Phenylenediamine, as claimed in any of claims 8, 9, 10, and 12, having a TBN, measured as in ASTM D4739, of at least 50, preferably at least 120 mg KOH/g.

## Patentansprüche

1. Kurbelgehäuseschmierölzusammensetzung wie ein Hochleistungsdieselschmieröl, das ein Öl mit Schmierviskosität in einer größeren Menge und eine oder mehrere N-aryl-N,N',N'-trialiphatische Kohlenwasserstoff-Phenylendiaminverbindungen in einer kleineren Menge aufweist oder durch deren Mischung hergestellt wird, wobei jede aliphatische Kohlenwasserstoffgruppe, vorzugsweise Alkyl, geradkettig ist und 1 bis 12, vorzugsweise 5 bis 12, besonders bevorzugt 5 bis 8 Kohlenstoffatome aufweist.

2. Zusammensetzung nach Anspruch 1, die eine gemäß ASTM D4739 gemessene TBN (Gesamtbasenzahl) von mindestens 6, wie 6 bis 20, aufweist.

3. Zusammensetzung nach Anspruch 1, die einen SASH-Gehalt (Sulfatasche-Gehalt) von nicht mehr als 0,8 Masse-% aufweist.

4. Zusammensetzung nach Anspruch 1, wobei mindestens 10%, wie mindestens 15%, oder mindestens 20%, wie mindestens 25%, der durch ASTM D4739 gemessenen Zusammensetzungs-TBN von den Phenylendiaminverbindungen abgeleitet ist, und weniger als 25%, vorzugsweise weniger als 20% der Zusammensetzungs-TBN von anderen aschefreien TBN-Quellen als den Phenylendiaminverbindungen, einschließlich alkalischer Dispergiermittel, abgeleitet ist.

5. Zusammensetzung nach Anspruch 1, die eine Kupferkorrosionsleistung im Hochtemperaturlaborkorrosionstest (ASTM D6594) aufweist, die innerhalb der Grenzen der Spezifikation API CJ-4 und ACEA E6 liegt, und eine Verträglichkeitsleistung zu Fluorelastomer-Motordichtmaterialien im MB-AK6-Test aufweist, die innerhalb der Grenzen der Spezifikation MB p228.51 liegt.

6. Konzentrat zur Herstellung einer Schmierölzusammensetzung nach Anspruch 1, das 2,5 bis 30 Masse-% einer oder mehrerer der Phenylendiaminverbindungen, 10 bis 40 Masse-% eines stickstoffhaltigen Dispergiermittels, 2 bis 20 Masse-% eines aminischen Antioxidationsmittels, eines Phenolantioxidationsmittels, einer Molybdänverbindung oder deren Mischung, 5 bis 40 Masse-% eines Detergens; und 2 bis 20 Masse-% eines Metalldikohlenwasserstoffdithiophosphats aufweist.

7. Verfahren zum Schmieren von Oberflächen eines kompressionsgezündeten Verbrennungsmotors während seines Betriebs, das die folgenden Schritte aufweist:
(a) Bereitstellen in einer kleineren Menge eines oder mehrerer N-aryl-N,N',N'-trialiphatischer Kohlenwasserstoff-Phenylendiamine nach Anspruch 1 in einer größeren Menge eines Öls mit Schmierviskosität, um eine Schmierölzusammensetzung herzustellen, deren durch ASTM D4739 9 gemessene TBN dadurch erhöht wird, ohne gleichzeitig die SASH zu erhöhen, und die eine Kupferkorrosionsleistung im Hochtemperaturlaborkorrosionstest (ASTM D6594) aufweist, die innerhalb der Grenzen der Spezifikation API CJ-4 und ACEA E6 liegt, und eine Verträglichkeitsleistung zu Fluorelastomer-Motordichtmaterialien im MB-AK6-Test aufweist, die innerhalb der Grenzen der Spezifikation MB p228.51 liegt;
(b) Zuführen der Schmierölzusammensetzung dem Motorkurbelgehäuse; und
(c) Betreiben des Motors.

8. N-aryl-N,N',N'-aliphatisches Kohlenwasserstoff-Phenylendiamin der Formel 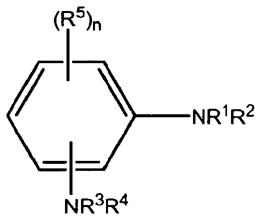 wobei R¹ Aryl ist;
jeweils R², R³ und R⁴ unabhängig ein geradkettiger aliphatischer C₅ bis C₁₂-Kohlenwasserstoffrest, vorzugsweise Alkyl, ganz besonders bevorzugt C₅ bis C₈-Alkyl ist;
R⁵ oder jedes R⁵ unabhängig Wasserstoff oder ein Kohlenwasserstoffrest, vorzugsweise Alkyl ist, der 1 bis 12 Kohlenstoffatome aufweist; und
n 0 - 4 ist.

9. Phenylendiamin nach Anspruch 8, das ein durchschnittliches Molekulargewicht von 450 bis 700, wie von 450 bis 650, vorzugsweise von 500 bis 600 aufweist.

10. Phenylendiamin nach Anspruch 8, wobei die Stickstoffatome zueinander para-angeordnet sind.

11. Mischung aus Phenylendiaminverbindungen nach einem der Ansprüche 8 bis 10.

12. N-Phenyl-N,N',N'-tri-n-pentyl-p-Phenylendiamin.

13. Phenylendiamin nach einem der Ansprüche 8, 9, 10 und 12, das eine gemäß ASTM D4739 gemessene TBN von mindestens 50, vorzugsweise mindestens 120 mg KOH/g aufweist.

## Revendications

1. Composition d'huile lubrifiante pour carter de moteur telle qu'une huile lubrifiante pour diesel de haute tenue comprenant ou préparée en mélangeant une huile de viscosité lubrifiante dans une quantité majeure, et un ou plusieurs composés de N-aryl-N,N',N'-(trihydrocarbyl aliphatique)-phénylènediamine dans une quantité mineure, chaque groupe hydrocarbyle aliphatique, de préférence alkyle, étant à chaîne linéaire et portant 1 à 12, de préférence 5 à 12, mieux 5 à 8 atomes de carbone.

2. Composition selon la revendication 1 ayant un indice de basicité (TBN) mesuré selon la norme ASTM D4739 d'au moins 6, comme de 6 à 20.

3. Composition selon la revendication 1 ayant une teneur en cendres sulfatées ne dépassant pas 0,8 % en masse.

4. Composition selon la revendication 1, au moins 10, comme au moins 15, ou au moins 20, comme au moins 25 % du TBN de la composition tel que mesuré par la norme ASTM D4739 étant dérivés desdits composés de phénylènediamine, et moins de 25, de préférence moins de 20 % du TBN de la composition étant dérivés de sources de TBN sans cendres autres que lesdits composés de phénylènediamine, y compris des dispersants basiques.

5. Composition selon la revendication 1 qui a une performance contre la corrosion du cuivre dans l'essai de corrosion sur banc à haute température (ASTM D6594) qui se situe dans les limites des spécifications API CJ-4 et ACEA E6, et qui a une performance de compatibilité avec les matériaux d'étanchéité pour moteur à base d'élastomères fluorés dans l'essai MB-AK6 qui se situe dans les limites de la spécification MB p228.51.

6. Concentré pour la préparation d'une composition d'huile lubrifiante selon la revendication 1 comprenant de 2,5 à 30 % en masse d'un ou plusieurs desdits composés de phénylènediamine ; 10 à 40 % en masse d'un dispersant contenant de l'azote ; 2 à 20 % en masse d'un antioxydant aminique, d'un antioxydant phénolique, d'un composé du molybdène, ou d'un mélange de ceux-ci ; 5 à 40 % en masse d'un détergent ; et 2 à 20 % en masse d'un dihydrocarbyldithiophosphate métallique.

7. Procédé de lubrification de surfaces d'un moteur à combustion interne à allumage par compression pendant son fonctionnement, comprenant
(a) le mélange d'une ou plusieurs N-aryl-N,N',N'-(trihydrocarbyl aliphatique)-phénylènediamines telles que définies dans la revendication 1 dans une quantité mineure et d'une huile de viscosité lubrifiante dans une quantité majeure pour préparer une composition d'huile lubrifiante, dont le TBN, tel que mesuré par la norme ASTM D4739, est ainsi amélioré sans augmenter simultanément les cendres sulfatées, et qui a une performance contre la corrosion du cuivre dans l'essai de corrosion sur banc à haute température (ASTM D6594) qui se situe dans les limites des spécifications API CJ-4 et ACEA E6, et qui a une performance de compatibilité avec les matériaux d'étanchéité pour moteur à base d'élastomères fluorés dans l'essai MB-AK6 qui se situe dans les limites de la spécification MB p228.51 ;
(b) l'introduction de la composition d'huile lubrifiante dans le carter du moteur ; et
(c) le fonctionnement dudit moteur.

8. N-aryl-N,N',N'-(hydrocarbyl aliphatique)-phénylènediamine de formule 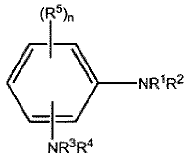 dans laquelle R¹ représente un aryle ;
chacun de R², R³ et R⁴ représente indépendamment un hydrocarbyle aliphatique en C₅ à C₁₂ à chaîne linéaire, de préférence un alkyle, idéalement un alkyle en C₅ à C₈ ; R⁵ ou chaque R⁵ représente indépendamment un hydrogène ou un hydrocarbyle, de préférence un alkyle, portant 1 à 12 atomes de carbone ; et
n vaut 0-4.

9. Phénylènediamine selon la revendication 8, ayant un poids moléculaire moyen de 450 à 700, comme de 450 à 650, de préférence de 500 à 600.

10. Phénylènediamine selon la revendication 8, dans laquelle les atomes d'azote sont situés en para l'un de l'autre.

11. Mélange de composés de phénylènediamine selon l'une quelconque des revendications 8 à 10.

12. N-phényl-N,N',N'-tri-n-pentyl-p-phénylènediamine.

13. Phénylènediamine selon l'une quelconque des revendications 8, 9, 10 et 12, ayant un TBN, mesuré comme dans la norme ASTM D4739, d'au moins 50, de préférence au moins 120 mg KOH/g.
